# EUROPEAN PATENT SPECIFICATION

(11) **EP 1 662 628 B1**
(45) Date of publication and mention of the grant of the patent: **03.10.2007**
(21) Application number: 05025186.7
(22) Date of filing: 17.11.2005
(51) Int. Cl.: H02G 3/30, H02G 3/32, B60J 5/06, H02G 11/00

(54) **A mounting fitting**
Haltevorrichtung
Dispositif de support

(30) Priority: 24.11.2004 JP 2004339085
(43) Date of publication of application: 31.05.2006
(73) Proprietor: Sumitomo Wiring Systems, Ltd., Yokkaichi-City, Mie, 510-8503 (JP)
(72) Inventor: Kida, Yuji c/oSumitomo Wiring Systems, Ltd., Yokkaichi-city, Mie 510-8503 (JP); Kobayashi, Yoshinao c/o Sumitomo Wiring Syst.,Ltd., Yokkaichi-city, Mie 510-8503 (JP)
(74) Representative: Müller-Boré & Partner Patentanwälte

(56) References cited:
- EP-A- 1 241 054
- US-A- 4 313 587
- US-A1- 2003 184 118
- PATENT ABSTRACTS OF JAPAN vol. 2000, no. 03, 30 March 2000 (2000-03-30) & JP 11 348683 A (TOYOTA AUTO BODY CO LTD), 21 December 1999 (1999-12-21)

## Description

The present invention relates to a mounting fitting.

Metallic mounting fittings have been conventionally used in the case of fixing an object to be mounted to a fixed member. The mounting fittings are formed by press-working metallic plate materials and often required to have a high strength. In such a case, a measure is taken, for example, by forming a reinforcing portion by bending or embossing (see, for example, Japanese Unexamined Patent Publication No. 2003-232084).

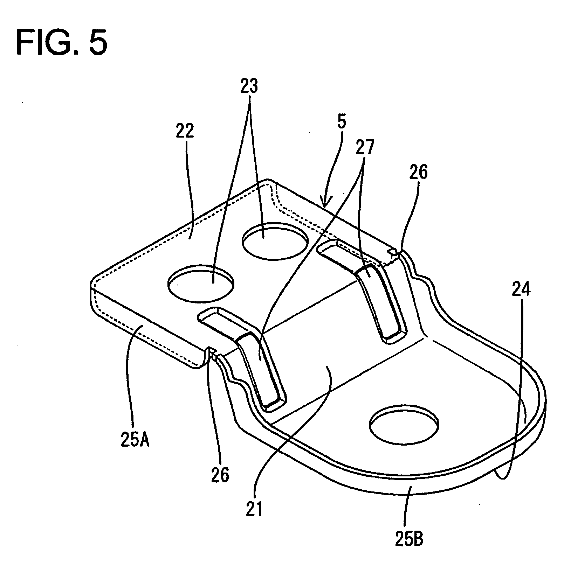

The aforementioned fitting is bent at about 90° as a whole, and has two objects to be mounted fixed at the opposite ends thereof. Since this fitting has a reinforcing rib formed on one surface substantially over the entire length, a high strength can be obtained. However, the reinforcing rib can be formed over the entire length in this way because the fixing surfaces to the objects to be mounted are located only on one surface of the fitting. For example, a problem as described below arises in the case where both surfaces of the fitting are used as mounting surfaces (see FIG. 5).

Specifically, in a fitting 5 shown in FIG. 5, mounting surfaces 22, 24 are defined on the front side of one end and on the rear side of the other end. The mounting surface 24 at the foreside of FIG. 5 is defined on the rear surface of the fitting 5, whereas the mounting surface 22 at the backside is defined on the front surface of the fitting 5. Accordingly, in order to enable the mounting without any interference with reinforcing edges 25A, 25B, bending directions of the reinforcing edges 25A, 25B have to be changed for the respective mounting surfaces 22, 24. Then, the reinforcing edges 25A, 25B are divided between the two mounting surfaces 22, 24 and cannot be continuous with each other. This has stood as a hindrance to the ensuring of sufficient strength.

EP 1 241 054 A2 discloses a wiring harness arrangement assembly comprising a pivotal harness guide provided in a side of a car body or a sliding door. A corrugated tube is secured to a pivotal harness support member of the pivotal harness guide.

The present invention was developed in view of the above problem, and an object thereof is to enhance the strength of a mounting fitting.

This object is solved according to the invention by a mounting fitting according to claim 1. Preferred embodiments of the invention are subject of the dependent claims.

According to the invention, there is provided a mounting fitting or member formed by bending a metallic plate material and used to make an object, such as a casing for at least partly accommodating a wiring for a sliding door, to be mounted fixable to a fixed member, such as a panel member, wherein:
a first mounting surface to be at least partly opposed to the object to be mounted so as to be mountable on the object to be mounted is defined on one surface,
a second mounting surface to be at least partly opposed to the fixed member so as to be mountable on the fixed member is defined at a position of the other surface displaced from the first mounting surface, and
one or more reinforcing edges bent (at an angle different from 0° or 180°, preferably substantially normal) such that edge ends thereof face substantially in the same direction or on the same side along the longitudinal direction thereof and being substantially continuous along the longitudinal direction thereof without any cut are formed at least at the opposite lateral edges extending from the first mounting surface to the second mounting surface.

Accordingly, the reinforcing edges are substantially continuously formed to extend from the first mounting surface to the second mounting surface without any cut. Thus, the strength of the mounting fitting can be improved as compared to conventional ones.

According to a preferred embodiment of the invention, the reinforcing edges are formed at the opposite lateral edges extending from the first mounting surface to the second mounting surface and at least ends of the lateral edges at one side are connected by a U-shaped curved portion.

Accordingly, since the reinforcing edges are arranged at the opposite lateral edges of the first and second mounting surfaces and are connected with each other, a long range is ensure for the continuous reinforcing edge. Thus, the mounting fitting can be better reinforced.

Preferably, either one of the mounting surfaces is struck to bulge out in the substantially same direction as the facing direction of the edge ends of the reinforcing edges, thereby forming a step at a boundary between the two mounting surfaces, and the struck surface is located at such a position having the substantially same height as the edge end located on the struck surface or slightly projecting more outward.

Accordingly, there is no interference with the reinforcing edges even if both mounting surfaces are opposed to and brought into contact with the object to be mounted and the fixed member. Thus, the inventive mounting fitting is applicable even if the object to be mounted and the fixed member have wide areas.

Most preferably, one or more substantially U-shaped grooves are formed between the opposite lateral edges of one of the mounting surfaces and the reinforcing edge upon bending the other of the mounting surfaces with respect to the one mounting surface to form a stepping surface.

According to a further preferred embodiment of the invention, an edge end of the reinforcing edge is located substantially at the same height as the one mounting surface.

Preferably, the mounting fitting further comprises one or more ribs substantially longitudinally provided in or on the first mounting surface and/or the second mounting surface.

Further preferably, the rib(s) is/are provided in an intermediate position of a range preferably extending from a stepping surface to one of the first and second mounting surfaces and/or at the (preferably substantially opposite) side(s) of the one or more mounting holes in the other of the first and second mounting surfaces.

Still further preferably, the rib in the intermediate or middle and/or the rib(s) at the side(s) are formed to project in substantially opposite directions.

Further preferably, the rib in the intermediate is formed so as to extend over one of the stepped or bent portions between the second mounting surface and an inclined stepping surface and between the first mounting surface and the inclined stepping surface, respectively, while the rib(s) at the side(s) of the rib in the intermediate or middle is/are formed so as to extend over the other of the stepped or bent portions.

Most preferably, the mounting fitting further comprises one or more embossed portions at stepped or bent portions between the either one of the first and second mounting surfaces and an inclined stepping surface formed between the first and second mounting surfaces.

According to a further aspect of the invention, there is provided the use of a mounting fitting or member according to the invention or a preferred embodiment thereof, to fixedly mount an object, such as a casing for at least partly accommodating a wiring for a sliding door, to a fixed member, such as a panel member.

According to a preferred embodiment of this aspect of the invention, the mounting fitting is positioned at one or more distal ends of the object to be mounted.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a front view showing a state where mounting fittings are mounted on a casing for a slide door,

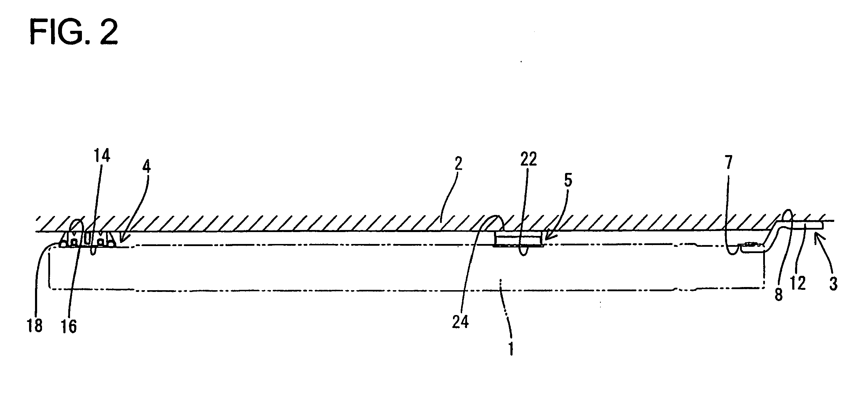

FIG. 2 is a side view showing mounted states of the mounting fittings on the door,
FIG. 3 is a perspective view of the front mounting fitting,
FIG. 4 is a perspective view of the rear mounting fitting, and
FIG. 5 is a perspective view of the middle mounting fitting.

One preferred embodiment of the present invention is described with reference to the accompanying the drawings. In this embodiment, mounting fittings are used for a power feeding device for a slide door of an automotive vehicle. Specifically, wiring for feeding power to electrical components of the door needs to be laid between the slide door of the automotive vehicle and a vehicle body. Thus, a casing 1 for at least partly accommodating the wiring for the door and the like is incorporated into the door. The casing 1 preferably is substantially formed such that two long plate members made of a metal (aluminum alloy) and/or of a composite material are substantially opposed to each other, and wires, connectors, electric circuits and the like can be at least partly accommodated in a space defined between these plate members. Connectors are connected with ends of these wires and electrically connectable with electrical components (e.g. a motor for moving a door glass upward and downward) disposed in or on the door. The casing 1 is or is to be fixed to or near a lower part of a door inner panel 2 by mounting fittings (preferably made of the same material as the casing 1) arranged at one or more positions, e.g. at three positions.

When the door is opened or closed, the casing 1 receives a relatively large force such as a pulling force from a wire laying portion of the vehicle body. The respective mounting fittings are required to have a sufficient strength against this force. In this embodiment, a conventional mounting fitting is used as it is as a mounting fitting 5 arranged in an intermediate position (preferably substantially in the middle), and the technology of the present invention preferably is applied to mounting fittings 3, 4 arranged at the opposite ends.

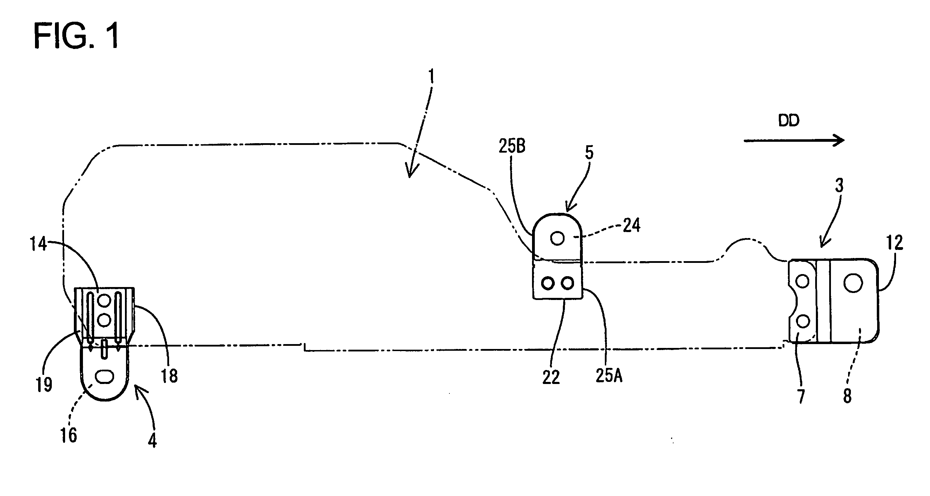

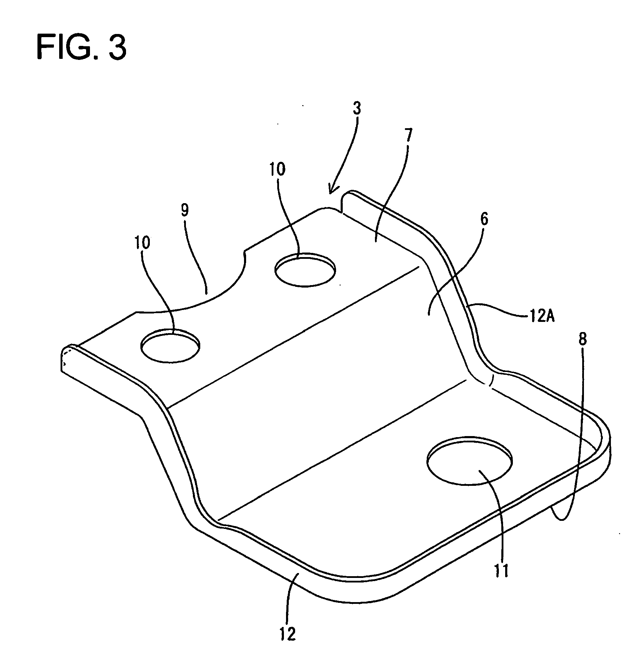

First, the mounting fitting (hereinafter, "front mounting fitting 3") mounted at the right end (at or near the front end of the slide door, i.e. at the front side with respect to a driving direction DD of the vehicle) shown in FIG. 1 in such a manner as to at least partly bulge out forward is described (see FIG. 3). This front mounting fitting 3 is formed by a (preferably substantially rectangular) plate member and has an inclined or cranked stepping surface 6 in an intermediate portion (preferably substantially in the middle), wherein one surface (front surface in FIG. 3) at the back portion (preferably substantially the back half) with this stepping surface 6 as a boundary serves as a first mounting surface 7 to be at least partly opposed to the surface of the casing 1 facing the inner panel 2 and to be mountable on this surface. The other surface (rear surface in FIG. 3) of the fore portion (preferably substantially the fore half) with the stepping surface 6 as a boundary serves as a second mounting surface 8 to be at least partly opposed to and mounted on the inner panel 2.

An arcuate or bent escaping recess 9 is formed in an intermediate position (preferably substantially in the widthwise middle) of or at one lateral edge of the first mounting surface 7, and one or more crimping holes 10 are formed at the lateral or substantially opposite side(s) of the escaping recess 9. On the other hand, burring or bearing tubes or pins loosely at least partly fittable into these two crimping holes 10 stand on or project from the casing 1. After both burring tubes are loosely at least partly fitted into the corresponding crimping holes 10, crimping or deforming or bending or folding is applied to fix the front mounting fitting 3.

Both corner portions of the second mounting surface 8 are preferably formed to have arcuate or bent contours, and at least one bolt hole 11 used to mount the second mounting surface 8 onto the inner panel 2 is formed preferably at a position slightly displaced to one side. A reinforcing edge 12 is formed on at least part, preferably the substantially entire circumference of the front mounting fitting 3 except the edge where the escaping recess 9 is formed by being bent substantially at an angle different from 0° or 180°, preferably substantially at a right angle. This reinforcing edge 12 is bent such that an edge end 12A faces substantially in the same direction (upward in FIG. 3) in the entire area, i.e. in such a direction as to be held back-to-back with or being substantially opposite to or projecting in a direction opposite or away from the door inner panel 2, and preferably is substantially continuous without any cut over the entire length. In this embodiment, an end portion of the casing 1 can be tightly held between parts of the reinforcing edge 12 located at positions of the first mounting surface 7 substantially facing along the width direction.

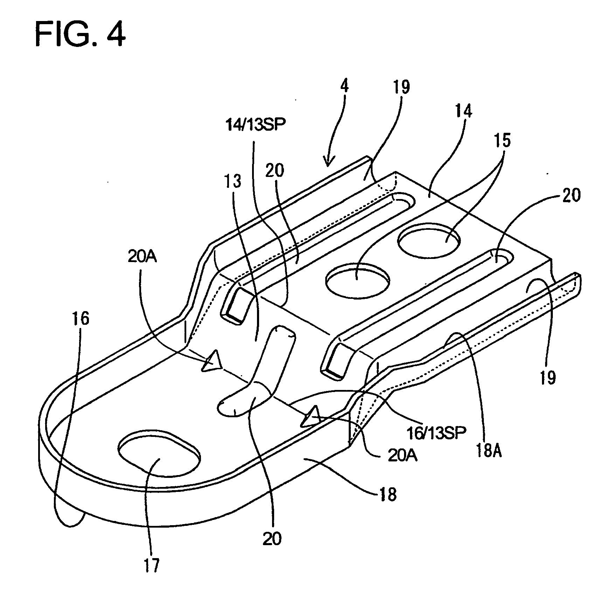

Next, the mounting fitting arranged at the left end (at or near the rear end of the slide door, i.e. at the rear side with respect to a driving direction DD of the vehicle) shown in FIG. 1 (hereinafter, "rear mounting fitting 4") is described (see FIG. 4). The rear mounting fitting 4 is so to be mounted as to bulge out downward at the left or rear end of the casing 1. The rear mounting fitting 4 has an inclined stepping surface 13 in an intermediate position (preferably substantially in the middle), and an upper part (preferably substantially an upper half) thereof in FIG. 1 to be at least partly opposed to the casing 1 with the rear mounting fitting 4 mounted on the casing 1 serves as a first mounting surface 14. One or more, e.g. two crimping holes 15 are formed preferably substantially side by side along longitudinal direction in the first mounting surface 14. On the other hand, one or more burring or bearing tubes or pins (not shown) substantially corresponding to these crimping holes 15 stand on or project from the casing 1, and the rear mounting fitting 4 is mounted by a method similar the one for the aforementioned front mounting fitting 3.

On the other hand, the lower part (preferably substantially the lower half) of the front mounting fitting 3 bulging out from the casing 1 serves as a second mounting surface 16 to be at least partly opposed to the inner panel 2 so as to be mountable thereon. The leading end side of the second mounting surface 16 preferably is formed to have a semicircular or arch-like shape, and a bolt insertion hole 17 oblong in width direction is formed in an intermediate position (preferably substantially in the middle) of the second mounting surface 16. A reinforcing edge 18 is substantially continuously formed without any cut at the outer peripheral edge of the second mounting surface 16 over to the opposite side edges of the first mounting surface 14, and an edge end 18A is facing substantially in the same direction (direction to face the casing 1: upward in FIG. 4) along the longitudinal direction of the reinforcing edge 18. The reinforcing edge 18 is bent at the peripheral edge of the second mounting surface 16 at an angle different from 0° or 180°, preferably substantially at a right angle toward the casing 1 in a range around the second mounting surface 16 while preferably being bent in U-shape in ranges located at or close or corresponding to the opposite lateral edges of the first mounting surface 14 facing each other. In other words, U-shaped grooves 19 are formed between the opposite lateral edges of the first mounting surface 14 and the reinforcing edge 18 upon bending the second mounting surface 16 with respect to the first mounting surface 14 to form the stepping surface 13. By doing so, the edge end 18A of the reinforcing edge 18 can be located substantially at the same height as the first mounting surface 14, with the result that an interference of the reinforcing edge 18 upon opposing the first mounting surface 14 and the casing 1 to each other can be avoided. Therefore, the rear mounting fitting 4 can be mounted preferably utilizing a wide substantially flat portion of the casing 1.

Since the rear mounting fitting 4 is required to have a higher strength as compared to the other two mounting fittings 3, 5, one or more ribs 20 are provided in an intermediate position (preferably substantially in the middle) of a range preferably extending from the stepping surface 13 to the second mounting surface 16 and/or at the (preferably substantially opposite) side(s) of the two crimping holes 15 in the first mounting surface 14 in addition to the aforementioned reinforcing edge 18. The rib 20 in the intermediate or middle and/or that/those at the (preferably substantially opposite) side(s) are formed to project in substantially opposite directions in FIG. 4. Moreover, there are provided one or more embossed portions 20A at stepped or bent portions 16/13SP between the second mounting surface 16 and the inclined stepping surface 13 preferably further increasing the strength of the mounting fitting. Furthermore, the rib 20 in the intermediate or middle is formed so as to extend over one 16/13SP of the stepped or bent portions 16/13SP and 14/13SP between the second mounting surface 16 and the inclined stepping surface 13 and between the first mounting surface 13 and the inclined stepping surface 13, respectively, while the rib(s) 20 at the (preferably substantially opposite) side(s) of the rib 20 in the intermediate or middle is/are formed so as to extend over the other 14/13SP of the stepped or bent portions 16/13SP and 14/13SP.

Finally, the mounting fitting to be arranged in the intermediate position (preferably substantially in the middle) shown in FIG. 1 (hereinafter, "intermediate or middle mounting fitting 5") is described. As described above, a conventional mounting fitting is or may be used as the middle mounting fitting 5. However, it goes without saying that an inventive mounting fitting can also be used as such.

The intermediate or middle mounting fitting 5 also has an inclined stepping portion 21 in an intermediate position (preferably substantially in the middle), and a lower part (preferably substantially a lower half) thereof in FIG. 1 showing a mounted state on the casing 1 serves as a first mounting surface 22. Two crimping holes 23 are formed in the first mounting surface 22 (a method for fixing the middle mounting fitting 5 to the casing 1 using the crimping holes 23 may be similar to those for the front and/or rear mounting fittings 3, 4). An upper part (preferably substantially an upper half) of the intermediate or middle mounting fitting 5 serves as a second mounting surface 24 to be mounted on the inner panel 2.

Reinforcing edges 25A, 25B are bent in substantially opposite directions at the first and second mounting surfaces 22, 24. In other words, the reinforcing edge 25A of the first mounting surface 22 is bent at an angle different from 0° or 180°, preferably substantially at a right angle in a direction opposite to the casing 1, whereas the reinforcing edge 25B of the second mounting surface 24 is bent at an angle different from 0° or 180°, preferably substantially at a right angle in a direction different or substantially opposite to the inner panel 2. Accordingly, the two reinforcing edges 25A, 25B make cuts 26 at the stepping portion 21. Identified by 27 are one or more reinforcing ribs formed by embossing.

In this embodiment thus constructed, the reinforcing edges 12, 18 formed on the front and rear mounting fittings 3, 4 are substantially continuous without any cut along their longitudinal directions. Thus, the entire mounting fittings 3, 4 have high strengths and can sufficiently resist even the repeated exertion of forces resulting from the opening and closing of the slide door. Further, since the reinforcing edges 12, 18 preferably are formed not only along the opposite lateral edges along longitudinal direction, but also at the one or more U-shaped edges coupling these lateral edges, the strength can be further enhanced. If an area defined by the reinforcing edge is struck to bulge out up to the substantially same height as the edge end of the reinforcing edge or to bulge out further outward as an area of the first mounting surface 14 of the rear mounting fitting 4 defined by the reinforcing edge 18 is struck to bulge out up to the substantially same height as the edge end 18A of the reinforcing edge 18, no consideration needs to be made on the interference with the reinforcing edge upon mounting the mounting fitting on the casing 1. Thus, the mounting fitting can be mounted utilizing a wide flat surface of the casing 1.

Accordingly, to enhance the strength of a mounting fitting, a mounting fitting 3, 5 is made of a metallic (metal or alloy) plate material, wherein a first mounting surface 7, 14 to be mounted on a casing 1 is defined on one surface, and a second mounting surface 8, 16 to be mounted on an inner panel 2 is defined on the opposite surface. A reinforcing edge 12, 18 is formed by bending at an angle different from 0° or 180°, preferably substantially normal at a peripheral edge portion of the mounting fitting 3, 5 such that an edge end thereof faces in the substantially same direction or towards the same side of the mounting fitting. The reinforcing edge 12, 18 is continuous along the longitudinal direction thereof without any cut.

### <Other Embodiments>

The present invention is not limited to the above described and illustrated embodiment. For example, the following embodiments are also embraced by the technical scope of the present invention as defined by the claims.
(1) Although the mounting fittings applied to the casing 1 for the slide door are shown as examples in the foregoing embodiment, an object to be mounted or a fixed mating partner is not limited.
(2) The mounting fittings need not be always fixed to the casing 1 or the inner panel 2 by crimping, and may be fixed by bolting, welding, riveting or other means or a plurality of these means may be used in combination.
(3) Although the reinforcing edge is a long one including the U-shaped curved portion in the foregoing embodiment, it may not have the curved portion unlike the foregoing embodiment provided that it continuously extends without any cut along longitudinal direction at least over the first and second mounting surfaces.

### LIST OF REFERENCE NUMERALS

- 1: casing (object to be mounted)
- 2: inner panel (fixed member)
- 3, 4: mounting fitting
- 7, 14: first mounting surface
- 8, 16: second mounting surface
- 12, 18: reinforcing edge

## Claims

1. A mounting fitting (3; 4) formed by bending a metallic plate material and used to make an object (1), such as a casing (1) for at least partly accommodating a wiring for a sliding door, to be mounted fixable to a fixed member (2), such as a panel member (2), wherein:
a first mounting surface (7; 14) to be at least partly opposed to the object (1) to be mounted so as to be mountable on the object (1) to be mounted is defined on one surface,
a second mounting surface (8; 16) to be at least partly opposed to the fixed member (2) so as to be mountable on the fixed member (2) is defined at a position of the other surface displaced from the first mounting surface (7; 14),
**characterized by**
one or more reinforcing edges (12; 18) bent such that edge ends thereof face substantially in the same direction along the longitudinal direction thereof and being substantially continuous along the longitudinal direction thereof without any cut are formed at at least the opposite lateral edges extending from the first mounting surface (7; 14) to the second mounting surface (8; 16).

2. A mounting fitting according to claim 1, wherein the reinforcing edges (12; 18) are formed at the opposite lateral edges extending from the first mounting surface (7; 14) to the second mounting surface (8; 16) and at least ends of the lateral edges at one side are connected by a U-shaped curved portion.

3. A mounting fitting according to one or more of the preceding claims, wherein either one of the mounting surfaces (7, 8; 14, 16) is struck to bulge out in the substantially same direction as the facing direction of the edge ends of the reinforcing edges (12; 18), thereby forming a step (13) at a boundary between the two mounting surfaces (7, 8; 14, 16), and the struck surface is located at such a position having the substantially same height as the edge end located on the struck surface or slightly projecting more outward.

4. A mounting fitting according to one or more of the preceding claims, wherein one or more substantially U-shaped grooves (19) are formed between the opposite lateral edges of one (14) of the mounting surfaces (14, 16) and the reinforcing edge (18) upon bending the other (16) of the mounting surfaces (14, 16) with respect to the one mounting surface (14) to form a stepping surface (13).

5. A mounting fitting according to claim 4, wherein an edge end (18A) of the reinforcing edge (18) is located substantially at the same height as the one mounting surface (14).

6. A mounting fitting according to one or more of the preceding claims, further comprising one or more ribs (20) substantially longitudinally provided in or on the first mounting surface (7; 14) and/or the second mounting surface (8; 16).

7. A mounting fitting according to claim 6, wherein the rib(s) (20) is/are provided in an intermediate position of a range preferably extending from a stepping surface (13) to one (16) of the first and second mounting surfaces (14, 16) and/or at the side(s) of the one or more mounting holes (15) in the other (14) of the first and second mounting surfaces (14, 16).

8. A mounting fitting according to claim 7, wherein the rib (20) in the intermediate or middle and/or the rib(s) (20) at the side(s) are formed to project in substantially opposite directions.

9. A mounting fitting according to claim 7 or 8, wherein the rib (20) in the intermediate is formed so as to extend over one (16/13SP) of the stepped or bent portions (16/13SP, 14/13SP) between the second mounting surface (16) and an inclined stepping surface (13) and between the first mounting surface (13) and the inclined stepping surface (13), respectively, while the rib(s) (20) at the side(s) of the rib (20) in the intermediate or middle is/are formed so as to extend over the other (14/13SP) of the stepped or bent portions (16/13SP, 14/13SP).

10. A mounting fitting according to one or more of the preceding claims, further comprising one or more embossed portions (20A) at stepped or bent portions (16/13SP; 14/13SP) between the either one of the first and second mounting surfaces (14, 16) and an inclined stepping surface (13) formed between the first and second mounting surfaces (14, 16).

## Patentansprüche

1. Halte- bzw. Montier-Vorrichtung bzw. -paßstück bzw. -anschlußpaßstück (3; 4), welche durch ein Biegen eines metallischen Plattenmaterials ausgebildet ist und verwendet ist bzw. wird, um einen Gegenstand bzw. ein Objekt (1), wie beispielsweise ein Gehäuse (1) für ein wenigstens teilweises Aufnehmen einer Verdrahtung für eine Schiebetür, welches an einem festgelegten bzw. fixierten Glied (2), wie beispielsweise einem Platten- bzw. Paneelglied (2) fixierbar zu montieren bzw. zu halten bzw. festzulegen ist, wobei:
eine erste Montage- bzw. Halteoberfläche bzw. -fläche (7; 14), um wenigstens teilweise dem zu montierenden Gegenstand (1) gegenüberzuliegen bzw. entgegengesetzt zu sein, um an dem zu montierenden Gegenstand (1) montierbar zu sein, an einer Oberfläche bzw. Fläche definiert ist,
eine zweite Montage- bzw. Halteoberfläche bzw. -fläche (8; 16), um wenigstens teilweise dem festgelegten Glied (2) gegenüberzuliegen bzw. entgegengesetzt zu sein, um an dem festgelegten Glied (2) montierbar zu sein, an einer Position der anderen Oberfläche definiert ist, welche von der ersten Montageoberfläche (7; 14) verlagert ist,
**gekennzeichnet durch**
eine oder mehrere verstärkende Kante(n) (12; 18), welche derart gebogen ist bzw. sind, daß Kantenenden davon im wesentlichen in derselben Richtung entlang der Längsrichtung davon gerichtet sind bzw. zeigen und im wesentlichen kontinuierlich bzw. anschließend entlang der Längsrichtung davon ohne irgendeinen Schnitt sind, an wenigstens den gegenüberliegenden seitlichen Rändern bzw. Kanten ausgebildet ist bzw. sind, welche sich von der ersten Montageoberfläche (7; 14) zu der zweiten Montageoberfläche (8; 16) erstrecken.

2. Haltevorrichtung nach Anspruch 1, wobei die verstärkenden Kanten (12; 18) an den gegenüberliegenden seitlichen Rändern bzw. Kanten ausgebildet sind, welche sich von der ersten Montageoberfläche (7; 14) zu der zweiten Montageoberfläche (8; 16) erstrecken und wenigstens Enden der seitlichen Ränder an einer Seite durch einen U-förmigen gekrümmten Abschnitt verbunden sind.

3. Haltevorrichtung nach einem oder mehreren der vorangehenden Ansprüche, wobei irgendeine der Montageoberflächen (7, 8; 14, 16) geschlagen bzw. beaufschlagt bzw. ausgeschalt ist, um sich nach außen in der im wesentlichen selben Richtung wie die zugewandte bzw. daraufhinzeigende Richtung der Kantenenden der verstärkenden Kanten (12; 18) zu wölben, wodurch eine Stufe (13) an einer Grenze zwischen den zwei Montageoberflächen (7, 8; 14, 16) ausgebildet ist bzw. wird, und die beaufschlagte Oberfläche an einer derartigen Position angeordnet ist, welche im wesentlichen dieselbe Höhe wie das Kantenende aufweist, das an der beaufschlagten Oberfläche angeordnet bzw. lokalisiert ist, oder geringfügig weiter nach außen vorragt.

4. Haltevorrichtung nach einem oder mehreren der vorangehenden Ansprüche, wobei eine oder mehrere im wesentlichen U-förmige Rille(n) bzw. Nut(en) (19) zwischen den gegenüberliegenden seitlichen Kanten von einer (14) der Montageoberflächen (14, 16) und der verstärkenden Kante (18) bzw. nach einem Biegen der anderen (16) der Montageoberflächen (14, 16) in bezug auf die eine Montageoberfläche (14) ausgebildet ist bzw. sind, um eine abstufende Oberfläche bzw. Fläche(13) auszubilden.

5. Haltevorrichtung nach Anspruch 4, wobei ein Kantenende (18A) der verstärkenden Kante (18) im wesentlichen auf derselben Höhe wie die eine Montageoberfläche (14) angeordnet ist.

6. Haltevorrichtung nach einem oder mehreren der vorangehenden Ansprüche, weiterhin umfassend eine oder mehrere Rippe(n) (20), welche im wesentlichen in Längsrichtung in oder an der ersten Montageoberfläche (7; 14) und/oder der zweiten Montageoberfläche (8; 16) vorgesehen ist bzw. sind.

7. Haltevorrichtung nach Anspruch 6, wobei die Rippe(n) (20) in einer Zwischenposition eines Bereichs zur Verfügung gestellt bzw. vorgesehen ist bzw. sind, welcher sich von einer abstufenden Oberfläche (13) zu einer (16) der ersten und zweiten Montageoberfläche (14, 16) und/oder an der (den) Seite(n) des einen oder mehrerer Montagelochs (-löcher) (15) in der anderen (14) der ersten und zweiten Montageoberfläche (14, 16) erstreckt.

8. Haltevorrichtung nach Anspruch 7, wobei die Rippe (20) dazwischen oder in der Mitte und/oder die Rippe(n) (20) an der (den) Seite(n) ausgebildet ist bzw. sind, um in im wesentlichen entgegengesetzten Richtungen vorzuragen.

9. Haltevorrichtung nach Anspruch 7 oder 8, wobei die dazwischenliegende Rippe (20) ausgebildet ist, um sich jeweils über einen (16/13SP) der abgestuften oder gebogenen Abschnitte (16/13SP, 14/13SP) zwischen der zweiten Montageoberfläche (16) und einer geneigten abstufenden Oberfläche bzw. Fläche (13) und zwischen der ersten Montageoberfläche (13) und/bzw. der geneigten abstufenden Oberfläche (13) zu erstrecken, während die Rippe(n) (20) an der (den) Seite(n) der dazwischenliegenden oder mittleren Rippe (20) ausgebildet ist bzw. sind, um sich über den anderen (14/13SP) der abgestuften oder gebogenen Abschnitte (16/13SP, 14/13SP) zu erstrecken.

10. Haltevorrichtung nach einem oder mehreren der vorangehenden Ansprüche, weiterhin umfassend einen oder mehrere geprägte(n) Abschnitt(e) (20A) an abgestuften oder gebogenen Abschnitten (16/13SP; 14/13SP) zwischen einer der ersten und zweiten Montageoberflächen (14, 16) und einer geneigten abstufenden Oberfläche (13), welche zwischen der ersten und zweiten Montageoberfläche (14, 16) ausgebildet ist.

## Revendications

1. Raccord de montage (3 ; 4) formé en pliant un matériau de plaque métallique et utilisé pour réaliser un objet (1), comme un boîtier (1) pour recevoir au moins partiellement un câblage pour porte coulissante, à monter de manière fixe à un élément fixe (2), comme un élément de panneau (2), dans lequel:
une première surface de montage (7 ; 14) qui doit être au moins partiellement opposée à l'objet (1) à monter, de façon à pouvoir être montée sur l'objet (1) à monter, est définie sur une surface,
une deuxième surface de montage (8 ; 16) qui doit être au moins partiellement opposée à l'élément fixe (2), de façon à pouvoir être montée sur l'élément fixe (2), est définie dans une position de l'autre surface déplacée par rapport à la première surface de montage (7 ; 14),
**caractérisé par**
un ou plusieurs bords de renfort (12, 18) pliés de sorte que leurs bords de fin soient sensiblement orientés dans la même direction, le long de la direction longitudinale de ceux-ci et, étant sensiblement continus le long de leur direction longitudinale sans aucune coupe, ils sont formés au niveau d'au moins les bords latéraux opposés s'étendant depuis la première surface de montage (7 ; 14) et la deuxième surface de montage (8 ; 16).

2. Raccord de montage selon la revendication 1, dans lequel les bords de renfort (12, 18) sont formés au niveau des bords latéraux opposés s'étendant de la première surface de montage (7 ; 14) à la deuxième surface de montage (8 ; 16) et au moins les extrémités des bords latéraux d'un côté sont connectées par une portion incurvée en forme de U.

3. Raccord de montage selon une ou plusieurs des revendications précédentes, dans lequel une des surfaces de montage (7, 8 ; 14, 16) est heurtée pour se bomber sensiblement dans la même direction que la direction d'orientation des bords de fin des bords de renfort (12,18) en formant ainsi un gradin (13) à la limite entre les deux surfaces de montage (7, 8 ; 14, 16) et la surface heurtée est située dans une position ayant sensiblement la même hauteur que le bord de fin situé sur la surface heurtée ou se projetant légèrement plus vers l'extérieur.

4. Raccord de montage selon une ou plusieurs des revendications précédentes, dans lequel une ou plusieurs cannelures sensiblement en forme de U (19) sont ménagées entre les bords latéraux opposés d'une (14) des surfaces de montage (14, 16) et le bord de renfort (18) lors du pliage de l'autre (16) des surfaces de montage (14, 16) relativement à une surface de montage (14) pour former une surface en gradins (13).

5. Raccord de montage selon la revendication 4, dans lequel un bord de fin (18A) du bord de renfort (18) est situé sensiblement à la même hauteur que la surface de montage (14).

6. Raccord de montage selon une ou plusieurs des revendications précédentes, comprenant en outre une ou plusieurs nervures (20) ménagées sensiblement longitudinalement dans ou sur la première surface de montage (7 ; 14) et/ou la deuxième surface de montage (8 ; 16) ;

7. Raccord de montage selon la revendication 6, dans lequel la(les) nervure(s) (20) est/sont ménagée(s) dans une position intermédiaire d'une gamme s'étendant de préférence depuis une surface en gradins (13) à l'une (16) des première et deuxième surfaces de montage (14, 16) et/ou sur le côté de l'un ou plusieurs orifices de montage (15) dans l'autre (14) de la première et de la deuxième surfaces de montage (14, 16).

8. Raccord de montage selon la revendication 7, dans lequel la nervure (20) dans l'interstice ou le milieu et/ou la(les) nervure(s) (20) sur le côté est(sont) formé(e)s pour se projeter dans des directions sensiblement opposées.

9. Raccord de montage selon la revendication 7 ou 8, dans lequel la nervure (20) dans le niveau intermédiaire est ménagée de façon à s'étendre sur une des portions en gradins ou pliée (16/13SP, 14/13SP) entre la deuxième surface de montage (16) et une surface en gradins inclinée (13) et entre la première surface de montage (13) et la surface en gradins inclinée (13) respectivement, tandis que la(les) nervure(s) (20) sur le côté de la nervure (20) dans l'interstice ou le centre est/sont formé(e)s de façon à s'étendre sur l'autre (14/13SP) des portions en gradins ou pliées (16/13SP, 14/13SP).

10. Raccord de montage selon une ou plusieurs des revendications précédentes, comprenant en outre une ou plusieurs portions gaufrées (20A) au niveau des portions en gradins ou pliées (16/13SP ; 14/13SP) entre l'une ou l'autre des première et deuxième surfaces de montage (14, 16) et une surface en gradins inclinée (13) formée entre la première et la deuxième surfaces de montage (14, 16).
